# EUROPÄISCHE PATENTSCHRIFT

(11) **EP 3 305 052 B1**
(45) Veröffentlichungstag und Bekanntmachung des Hinweises auf die Patenterteilung: **13.11.2019**
(21) Anmeldenummer: 17193937.4
(22) Anmeldetag: 29.09.2017
(51) Int. Cl.: A01B 63/111, A01B 69/00

(54) **STEUERANORDNUNG, ZUGMASCHINE MIT EINER STEUERANORDNUNG UND VERFAHREN FÜR EINE STEUERANORDNUNG**
CONTROL ASSEMBLY, TRACTOR WITH A CONTROL ASSEMBLY AND METHOD FOR A CONTROL ASSEMBLY
DISPOSITIF DE COMMANDE, TRACTEUR AVEC UN DISPOSITIF DE COMMANDE ET PROCÉDÉ POUR UN DISPOSITIF DE COMMANDE

(30) Priorität: 07.10.2016 DE 102016219470
(43) Veröffentlichungstag der Anmeldung: 11.04.2018
(73) Patentinhaber: Robert Bosch GmbH, 70442 Stuttgart (DE)
(72) Erfinder: Schleyer, Markus, 71640 Ludwigsburg (DE); Rose, Steffen, 71638 Ludwigsburg (DE); Michalke, Gabriele, 71263 Weil Der Stadt (DE)
(74) Vertreter: Thürer, Andreas

(56) Entgegenhaltungen:
- EP-A1- 1 813 142
- EP-A1- 2 907 368
- DE-A1- 10 349 321
- DE-A1-102005 005 557
- FR-A1- 2 681 500
- JP-A- H06 209 606

## Beschreibung

### Gebiet der Erfindung

Die Erfindung geht aus von einer Steueranordnung gemäß dem Oberbegriff des Anspruchs 1. Außerdem betrifft die Erfindung eine Zugmaschine mit einer Steueranordnung und ein Verfahren für eine Steueranordnung.

### Hintergrund der Erfindung

Aus dem Stand der Technik sind Zugmaschinen, insbesondere Traktoren, bekannt, die ein Hubwerk aufweisen, an dem ein Anbaugerät, insbesondere in Form eines Pflugs, angebracht ist. Pflügen stellt einen wichtigen Arbeitsgang in einer landwirtschaftlichen Bodenbearbeitung dar. Ein Ziel ist hierbei, ein möglichst gleichmäßiges Pflugbild zu erreichen. Dies bedeutet, dass vorzugsweise eine einheitliche Breite und Tiefe von Furchen, die von einzelnen Pflugscharen des Pflugs gebildet werden, vorgesehen sind. Dies soll unabhängig von etwaigen Änderungen der Bodenwelligkeit erfolgen. Eine Pflugtiefe kann über das Hubwerk des Traktors eingestellt werden. Das Hubwerk kann hierbei einen Unterlenker und zumindest einen Oberlenker aufweisen, wobei eine Länge des Oberlenkers verstellbar sein kann, um wiederum die Neigung des Pflugs zu verstellen. Des Weiteren können der Unterlenker und der Oberlenker gemeinsam über einen Hydrozylinder verschwenkbar sein. Die Steuerung der Verstellung des Oberlenkers und die Steuerung der Verschwenkung des Ober- und Unterlenkers erfolgt beispielsweise über eine elektronische Hubwerksregelung (EHR).

Die EHR, mit der die Pflugtiefe eingestellt werden kann, basiert beispielsweise auf einer gleichbleibenden Zugkraft, die über einen Kraftmessbolzen gemessen wird. Alternativ kann eine Regelung einer vorab eingestellten Pflugtiefe des Pflugs erfolgen. Bei einem veränderlichen Höhenprofil beziehungsweise bei einer veränderlichen Bodenwelligkeit kann eine optimale Pflugtiefe durch diese Hubwerksregelung nicht immer eingehalten werden, beispielsweise wenn der Traktor und der Pflug in eine Senke hineinfahren und sich der Pflug dabei tiefer eingräbt.

Das Dokument EP 1 813 142 A1 offenbart eine Landmaschine mit mindestens einer Bearbeitungseinrichtung und einer Bodenerfassungseinrichtung zur berührungslosen Erfassung von einer Fremdkörpern im Erntegut und/oder einer Bodeneigenschaft, wobei die Bodenerfassung mit Hilfe eines akustischen Sensors durchgeführt wird, welcher im hörbaren Frequenzbereich arbeitet.

Das Dokument Filterrohr 2 681 500 A1 offenbart eine Vorrichtung für ein Fahrzeug mit einem Arbeitswerkzeug, mit einem Sender und einem Empfänger von Ultraschallsignalen zur Erfassung einer Position des Fahrzeugs. Der erfasste Wert wird mit definierten Vergleichswerten verglichen, und aus der Änderung eine Zielposition des Arbeitswerkzeugs ermittelt.

Das Dokument EP 2 907 368 A1 offenbart ein System zur automatischen Kontrolle einer Traktionsverstärkung für einen Schlepper, der ein Anhängefahrzeug zieht. Dabei sind Mittel vorgesehen, mit welchen eine Fahrgeschwindigkeit und eine Antriebsgeschwindigkeit ermittelt werden kann, aus deren Vergleich dann traktionsverstärkende Maßnahmen für das Anhängefahrzeug eingeleitet werden.

Das Dokument DE 103 49 621 A1 offenbart ein Verfahren zur Ermittlung einer Strohverteilung, wobei mittels einer Kamera Bilder erstellt werden, und mittels eines elektronisch-optischen Auswerteverfahrens die Strohverteilung und die Einarbeitungsqualität von Stroh und Pflanzen in den Boden aufgrund hiterlegter Daten ermittelt und bewertet werden.

### Offenbarung der Erfindung

Demgegenüber liegt der Erfindung die Aufgabe zugrunde, eine Steueranordnung zur Hubwerksregelung zu schaffen, mit der auf einfache Weise eine verbesserte Regelung eines Anbaugeräts ermöglicht ist. Außerdem ist es Aufgabe der Erfindung, eine Zugmaschine zu schaffen, bei der auf kostengünstige und vorrichtungstechnisch einfache Weise eine verbesserte Hubwerksregelung erfolgt. Des Weiteren liegt der Erfindung die Aufgabe zugrunde, ein Verfahren zu schaffen, mit dem auf einfache Weise eine verbesserte Hubwerksregelung ermöglicht ist.

Die Aufgabe hinsichtlich der Steueranordnung wird gelöst gemäß den Merkmalen des Anspruchs 1, hinsichtlich der Zugmaschine gemäß den Merkmalen des Anspruchs 9 und hinsichtlich des Verfahrens gemäß den Merkmalen des Anspruchs 10. Vorteilhafte Weiterbildungen der Erfindung sind Gegenstand der Unteransprüche.

Es ist eine Steueranordnung zur Hubwerksregelung, insbesondere zur elektronischen Hubwerksregelung (EHR), vorgesehen. Die Hubwerksregelung dient zur Regelung eines Hubwerks für ein Anbaugerät einer Zugmaschine, insbesondere eines Traktors. Bei dem Anbaugerät handelt es sich beispielsweise um einen Pflug oder um ein Mähwerk. Die Steueranordnung hat eine Steuervorrichtung zum Steuern des Hubwerks. Vorteilhafterweise ist eine Sensorik zum Erfassen einen Bodenwelligkeit, insbesondere im Voraus, auf einer angenommenen Fahrspur der Zugmaschine vorgesehen. Die Steuervorrichtung steuert dann in Abhängigkeit der, insbesondere im Voraus, erfassten Bodenwelligkeit oder des erfassten Bodenreliefs oder Höhenprofils das Hubwerk. Somit kann bei bekannter Bodenwelligkeit die Lage des Anbaugeräts durch die Steueranordnung vorgesteuert werden.

Diese Lösung hat den Vorteil, dass mit der Steueranordnung ein Abtasten der Bodentopologie bereits mit einem gewissen Vorlauf erfolgen kann, womit eine vorausschauende Regelstrategie oder Vorsteuerung ermöglicht ist. Aus dem Stand der Technik bekannte Lösungen zum Positionieren von Anbaugeräten sind dagegen reaktiv, womit eine aktive Positionierung erst dann erfolgt, wenn bereits eine Abweichung von einem Soll-Verhalten erkannt ist. Dies ist beispielsweise bei den eingangs angeführten Kraftmessbolzen des Hubwerks der Fall. Somit sind vorteilhafterweise durch die Steueranordnung keine Zugkraftsensoren, wie der Kraftmessbolzen, mehr notwendig, wodurch Kosten eingespart werden können. Des Weiteren ist aus dem Stand der Technik bekannt, dass zum Führen von Anbaugeräten über den Boden mit einem vorbestimmten Abstand ein mechanischer Abstandhalter, wie beispielsweise ein Stützrad, eingesetzt wird. Durch die erfindungsgemäße Steueranordnung kann ein derartiger Abstandhalter entfallen. Des Weiteren ist vorteilhaft, falls Zugmaschinen mit zwei Hubwerken, insbesondere vorne und hinten, eingesetzt werden, keine doppelte Sensorik benötigt wird, da Informationen über die Bodentopologie für beide Hubwerke gleichermaßen genutzt werden können. Außerdem ist vorteilhaft, dass durch eine automatische Einstellung einer Anbaugerätehöhe, insbesondere Pflughöhe, dem Fahrer der Zugmaschine der oft langwierige Einstellprozess, insbesondere vor dem Pflügen, abgenommen werden kann. Zusätzlich können Fehleinstellungen, die in einem ungleichmäßigen Pflugbild resultieren, vermieden werden. Außerdem führt die Steueranordnung zu einer Kraftstoffersparnis der Zugmaschine und einer Komfortverbesserung, insbesondere beim Pflügen, da ein Schlupf der Zugmaschine durch die erfindungsgemäße Steueranordnung verringert ist. Außerdem ist ein Arbeitsergebnis verbessert.

Mit anderen Worten sind mit der Erfindung eine Online-Aufnahme der Bodenwelligkeit mithilfe von an der Zugmaschine befindlicher Sensorik und die Nutzung dieser Informationen zur optimalen Positionierung des Anbaugeräts ermöglicht. Es kann somit eine Aufzeichnung der Bodenwelligkeit im Voraus erfolgen, worauf dann die Hubwerksregelung beim Pflügen basiert. Durch die Steueranordnung kann somit die Lage des Anbaugeräts optimal an das Bodenrelief angepasst und vorgesteuert werden.

Vorzugsweise ist mit der Steuervorrichtung eine Hubhöhe des Anbaugeräts in Abhängigkeit der erfassten Bodenwelligkeit steuerbar. Alternativ oder zusätzlich kann eine Neigung des Anbaugeräts in Abhängigkeit der erfassten Bodenwelligkeit gesteuert sein.

In weiterer Ausgestaltung der Erfindung hat die Sensorik zur Erfassung der Bodenwelligkeit vorzugsweise eine Kamera, insbesondere eine Frontkamera. Über diese kann dann die Bodenwelligkeit über Kamerabilder erfasst und insbesondere aufgezeichnet werden. Ein Vorteil der Kamera basierten Aufnahme des Bodenreliefs ist somit die aktuelle Aufzeichnung der Höhe. Somit kann dann die im Voraus basierend auf den erfassten Kamerabildern auf der angenommenen Fahrspur das Hubwerk gesteuert werden, in dem insbesondere die Hubhöhe und gegebenenfalls die Neigung verstellt wird.

Alternativ oder zusätzlich ist denkbar, dass die Sensorik zur Erfassung der Bodenwelligkeit ein Light Detection and Ranging (LiDAR) System oder einen LiDAR Sensor oder ein Airborn Laser Scanning (ALS) System aufweist. Beim Einsatz eines Lasersystems kann auf vorrichtungstechnisch einfache Weise eine Oberfläche mit einer hohen Genauigkeit von einem Laser gescannt werden und aus der Laufzeit des Lasersignals das Höhenprofil abgeleitet werden.

Alternativ oder zusätzlich kann die Sensorik zur Erfassung der Bodenwelligkeit ein Radio Detection and Ranging (Radar) System oder einen Radar Sensor aufweisen. Somit kann vorrichtungstechnisch einfach und mit einer hohen Genauigkeit durch eine Radar basierte Messung (Radar-Interferometrie) ein digitales Geländemodell erstellt werden.

Alternativ oder zusätzlich ist denkbar, dass die Sensorik mit einem Satelliten verbindbar ist, um die Bodenwelligkeit satellitengestützt zu erfassen. Somit ist vorrichtungstechnisch einfach eine satellitengestützte Aufnahme des Höhenprofils ermöglicht. Eine derartige Aufnahme des Geländes kann dann dazu dienen, daraus das Höhenprofil zu ermitteln.

Vorteilhafterweise ist denkbar, dass die Kamera und/oder das LiDAR System und/oder das ALS System und/oder das Radar System zusätzlich zur Umfelderfassung für zumindest eine weitere Assistenzfunktion genutzt wird/werden. Die Sensorik, insbesondere das Radar System, kann somit beispielsweise zusätzlich zur Geschwindigkeitsmessung und/oder zur Abstandsmessung zu anderen Objekten mit verwendet werden. Des Weiteren kann die Sensorik, insbesondere die Kamera, somit beispielsweise zusätzlich für eine Spurfindung und/oder für eine Unfallvermeidung, insbesondere auf einer Straße, und/oder zum Erkennen von Tieren (Wild) genutzt werden, womit Synergieeffekte erreicht werden.

Es ist eine Sensorik oder ein Empfänger zur Erfassung einer Position der Zugmaschine vorgesehen. Beispielsweise kann die Sensorik die Position über ein Navigationssatellitensystem erfassen. Bei diesem handelt es sich beispielsweise um ein globales Navigationssatellitensystem, wie GPS, Galileo, GLONAS und/oder Beidou. Mit der Position kann vorteilhafterweise auf die angenommene Fahrspur mit einer hohen Genauigkeit geschlossen werden. Außerdem ist ermöglicht eine Höhenprofilkarte aus der Bodenwelligkeit zusammen mit den entsprechenden Positionen zu erstellen.

In weiterer Ausgestaltung der Erfindung ist ein Geschwindigkeitssensor zur Erfassung einer Geschwindigkeit der Zugmaschine vorgesehen. Die erfasste Geschwindigkeit kann dann zur Steuerung des Hubwerks eingesetzt werden. Insbesondere kann dann das Hubwerk in Abhängigkeit der Geschwindigkeit und der Bodenwelligkeit von der Steuervorrichtung gesteuert sein. Aus der Geschwindigkeit kann des Weiteren geschlossen werden, wann die Zugmaschine mit dem Anbaugerät die im Voraus aufgezeichnete Ackerfläche überfährt um das Anbaugerät dann entsprechend zu steuern.

Vorzugsweise ist des Weiteren eine Sensorik zur Erfassung einer Ist-Höhe des Anbaugeräts und/oder einer Ist-Höhe des Hubwerks und/oder eine Sensorik zur Erfassung einer Ist-Anbaugerätetiefe, insbesondere einer Ist-Pflugtiefe, falls ein Anbaugerät in Form eines Pflugs eingesetzt ist, vorgesehen. Hierdurch ist beispielsweise ermöglicht, dass die aktuellen Pflugtiefe durch die Messung beispielsweise der Hubwerkshöhe oder der absoluten Höhe des Pflugs gemessen und aufgezeichnet werden kann. Die gemessene Pflugtiefe kann dann für ein Durchfahren der nächsten Parallelfurche (Bahn) oder der nächsten Parallelfurchen eingesetzt werden, indem der Pflug entsprechend der vorhergehenden Parallelfurche gesteuert wird. Somit kann die Regelung für die Parallelfurche n vorgesteuert sein in Abhängigkeit von Messdaten aus der Parallelfurche n-1. Des Weiteren kann die Messung der aktuellen Pflugtiefe für eine erstmalige oder erneuten Aufnahme der Bodenwelligkeit, beispielsweise eines Feldes oder Ackers, für zukünftige Fahrten erfolgen. Bei der Ist-Höhe handelt es sich beispielsweise um eine absolute Höhe. Mit anderen Worten kann die Hubwerksregelung - vorteilhafterweise mit der Annahme, dass die nächste Parallelfurche, die gepflügt wird, ein ähnliches Höheprofil hat wie die vorhergehende - auf den Wert der letzten Furche, bei der die Höhe aufgezeichnet wurde, vorgesteuert werden. Hierdurch ist ein verbessertes Arbeitsergebnis erreicht. Änderungen der Bodenwelligkeit der Parallelfurche werden wieder aktuell erfasst und in der nächsten Parallelfurche umgesetzt. Somit können eine direkte Messung der Hubtiefe sowie die direkte Umsetzung der Messdaten zu einer Vorsteuerung des Hubwerks in der nächsten Parallelfurche führen. Aus den erfassten Ist-Höhen oder der erfassten Hubwerkshöhe oder der erfassten Pflughöhe kann des Weiteren eine Karte mit einem Höhenprofil ausgebildet werden. Die Anmelderin behält sich vor auf die Sensorik zur Erfassung der angeführten Ist-Werte einen unabhängigen Anspruch zu richten.

Bei der Sensorik kann es sich um einen Winkelgeber und/oder um einen Zylinderwegsensor für einen Hubzylinder oder Hydrozylinder des Hubwerks handeln. Somit kann durch eine Messung der aktuellen Hubwerkshöhe mithilfe des Winkelsensors und der Kinematik der Hubwerks, beispielsweise einer Länge des Hydrozylinders, die Höhe des Hubwerks berechnet werden. Zur Erfassung der Ist-Höhe oder Ist-Anbaugerätetiefe kann die Sensorik alternativ oder zusätzlich eine Kamera und/oder einen Ultraschallsensor und/oder einen Infrarotsensor haben. Des Weiteren ist alternativ oder zusätzlich denkbar, dass die Sensorik einen Neigungssensor hat.

In weiterer Ausgestaltung der Erfindung ist vorzugsweise ein Algorithmus zur Auswertung der Kamerabilder und zur Bestimmung der Bodenwelligkeit vorgesehen. Der Algorithmus kann somit Kamerabilder der Kamera auswerten und daraus eine Bodenwelligkeit ableiten, über die die Steuervorrichtung das Hubwerk steuert. Vorzugsweise wird bei der Auswertung der Kamerabilder eine Referenzierung berücksichtigt, um die Größen, wie beispielsweise die Höhen und Tiefen der Bodenwelligkeit, im Kamerabild genauer festzustellen. Als Referenzierung kann ein Objekt im Kamerabild dienen. Das Objekt weist hierbei vorzugsweise eine etwa bekannte Größe auf. Hierbei kann sich beispielsweise um ein entferntes und/oder um ein festes Objekt handeln. Für die Referenzierung ist alternativ oder zusätzlich denkbar, eine Referenzhöhe einzusetzen, bei der es sich beispielsweise um den Abstand der Kamera am Zugfahrzeug zur Oberfläche handeln kann. Als Referenzhöhe kann alternativ oder zusätzlich der Messwert eines Höhemesssensors, wie beispielsweise eines barometrischen Höhenmesssensors oder eines GPS-basierten Höhenmesssensors, eingesetzt sein. Der Höhenmesssensor ist beispielsweise am Zugfahrzeug oder an einem, insbesondere vorausfliegenden, Flugroboter oder Drohne, befestigt. Mit anderen Worten kann mithilfe des Kamerabilds und dem Algorithmus zur Bilderkennung sowie der Referenzhöhe gegeben durch die Anbringung der Kamera und/oder eines barometrischen Höhensensors am Traktor oder der vorausfliegenden Drohne und/oder durch die Referenz zu entfernten oder festen Objekten das Höhenprofil des Bodens vor dem Traktor berechnet werden.

In weiterer Ausgestaltung der Erfindung ist ein Algorithmus vorgesehen, mit dem die Position der Zugmaschine und/oder des Anbaugeräts zeitabhängig vorbestimmbar ist. Vorzugsweise berücksichtigt der Algorithmus hierbei die Geschwindigkeit der Zugmaschine und die geometrischen Daten der Zugmaschine und/oder des Anbaugeräts, wie beispielsweise deren Länge. Mit anderen Worten kann durch das Wissen, wann der Traktor mit dem Anbaugerät die vorausberechnete Bodenwelligkeit überfährt in Abhängigkeit von der Geschwindigkeit und der Länge von Zugmaschine und Anbaugerät die Hubwerksregelung vorgesteuert werden, so dass beispielsweise das Anbaugerät in Form des Pflugs den Boden mit der optimal eingestellten Tiefe durchpflügt.

Es ist ein Algorithmus zur Erstellung von Kartendaten oder zum Erstellen einer Karte anhand der erfassten Bodenwelligkeit vorgesehen. Hierbei wird die Bodenwelligkeit in Abhängigkeit der erfassten Positionen der Zugmaschine in den Kartendaten oder in der Karte erfasst. Mit anderen Worten kann somit ein Algorithmus zur Erstellung von Kartendaten (GPS und Höhe) vorgesehen sein. Mit anderen Worten kann das durch beispielsweise die Kamera ermittelte Höhenprofil zusammen mit den GPS Koordinaten in einer Karte gespeichert und bei einer nächsten Fahrt über das Feld, beispielsweise im darauffolgenden Jahr oder bei darauffolgenden Arbeitsschritten, abgerufen werden. Die Hubwerksregelung kann auch basierend auf der erstellten Karte erfolgen.

Des Weiteren ist vorteilhafterweise eine Sensordatenerfassung oder eine Sensordatenerfassungseinheit vorgesehen, um die Messdaten oder Sensordaten eines oder mehrerer Sensoren zu erfassen, die vorstehend angeführt sind.

Weiter vorzugsweise ist ein Algorithmus vorgesehen, der in Abhängigkeit der erfassten Sensordaten die Hubwerkshöhe oder Soll-Hubwerkshöhe bestimmt.

Des Weiteren ist vorteilhafterweise ein Algorithmus zum Vorsteuern und Anpassen des Hubwerks vorgesehen.

Der Algorithmus oder die Algorithmen ist/sind vorzugsweise Teil einer Auswerteeinheit.

Um das Anbaugerät noch besser zu steuern, kann, wie vorstehende bereits erläutert, ein Neigungssensor vorgesehen sein, der eine Neigung der Zugmaschine um ihre Längsachse und/oder um ihre Querachse erfassen kann.

Vorzugsweise ist ein Speicher zum Abspeichern der Kartendaten und/oder einer oder mehrerer der erfassten Messdaten, wie beispielsweise Position der Zugmaschine, Bodenwelligkeit, Ist-Höhe, usw. vorgesehen. Bei dem Speicher handelt es sich beispielsweise um einen externen Speicher, wie beispielsweise einen Cloud-Speicher, und/oder um einen internen Speicher. Vorzugsweise kann auf den externen Speicher online zugegriffen werden. Die gespeicherten Daten führen des Weiteren zu dem Vorteil, dass beispielsweise ein Landwirt bei erneuten Fahrten mit der Zugmaschine auf einem bereits vermessenem Feld auf diese zurückgreifen kann, womit die optimale Tiefenregelung vorgesteuert werden kann. Des Weiteren ist somit ein gemapptes Höhenprofil, beispielsweise über eine Internetverbindung, vor der Fahrt abrufbar oder während der Fahrt online abrufbar.

Mit Vorteil ist ein Display vorgesehen. Mit diesem kann beispielsweise die Karte oder die Kartendaten dargestellt werden.

Erfindungsgemäß ist eine Zugmaschine oder ein Anbaugerät mit einer Steueranordnung gemäß einem oder mehrerer der vorhergehenden Aspekte vorgesehen. Der Sensor oder die Sensoren sind vorzugsweise an der Zugsmaschine und/oder am Anbaugerät befestigt. Ist eine Kamera zur Aufzeichnung der Bodenwelligkeit vorgesehen, so ist diese vorzugsweise nach vorne, also etwa in Fahrtrichtung bei Vorausfahrt, ausgerichtet. Alternativ oder zusätzlich ist denkbar, eine Kamera zur Aufnahme der Bodenwelligkeit an einer Drohne oder an einem Flugroboter zu befestigen, die/der beispielsweise voraus fliegen kann.

Weiterhin ist ein Gespann mit einer Zugmaschine und einem Anbaugerät gemäß einem oder mehreren der vorhergehenden Aspekte offenbart.

Erfindungsgemäß ist ein Verfahren für eine Steueranordnung gemäß einem oder mehrerer der vorhergehenden Aspekte gemäß dem Gegenstand des Anspruchs 10 vorgesehen.

In einem weiteren Schritt des Verfahrens kann vorteilhafterweise die aktuelle und/oder zukünftige Position des Anbaugeräts ermittelt werden.

Es kann außerdem vorgesehen sein, bei dem Verfahren die Bodenwelligkeit der aktuellen Parallelfurche oder der aktuellen Parallelfurchen durch Ermittlung der Pflugtiefe zu erfassen und dann das Anbaugerät in Abhängig der Bodenwelligkeit der vorausgegangenen Parallelfurche oder der vorausgegangenen Parallelfurchen zu steuern.

### Kurze Beschreibung der Zeichnungen

Ein bevorzugtes Ausführungsbeispiel der Erfindung wird im Folgenden anhand schematischer Zeichnungen näher erläutert. Es zeigen:
Figur 1 in einer schematischen Darstellung eine Steueranordnung gemäß einem Ausführungsbeispiel, die an einer Zugmaschine mit einem Anbaugerät vorgesehen ist,
Figur 2a die Zugmaschine aus Figur 1, bei der keine erfindungsgemäße Steuerung des Hubwerks erfolgt,
Figur 2b die Zugmaschine aus Figur 1, bei der eine erfindungsgemäße Steuerung des Hubwerks erfolgt,
Figur 3 eine Bodenwelligkeit in Abhängigkeit einer Position der Zugmaschine, und
Figur 4 in einem Ablaufdiagramm ein erfindungsgemäßes Verfahren für die Steueranordnung.

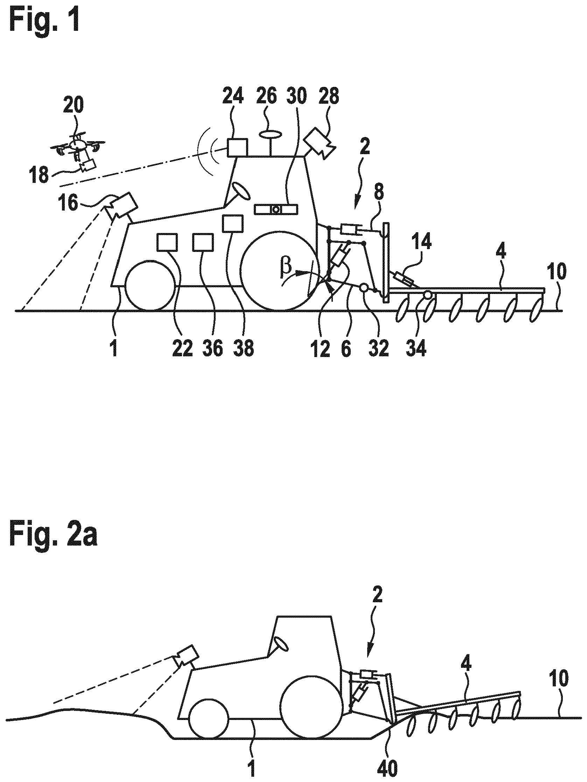

Gemäß Figur 1 ist eine Zugmaschine 1 in Form eines Traktors dargestellt. Diese hat ein hinteres Hubwerk 2, an dem ein Anbaugerät 4 in Form eines Pflugs befestigt ist. Das Hubwerk 2 hat einen Unterlenker 6 und einen als Hydrozylinder ausgebildeten Oberlenker 8. Dieser ist in seiner Länge verstellbar, um eine Neigung des Hubwerks 4 relativ zu einer Bodenoberfläche 10 einzustellen. Des Weiteren hat das Hubwerk 2 einen Hydrozylinder 12, der an der Zugmaschine 1 und über ein Gelenk am Unterlenker 6 angreift. Durch den Hydrozylinder 12 kann der Unterlenker 6 zusammen mit dem Oberlenker 8 verschwenkt werden, um insbesondere eine Höhe des Anbaugeräts 4 relativ zur Bodenoberfläche 10 einzustellen. Des Weiteren ist am Anbaugerät 4 ein Hydrozylinder 14 vorgesehen, um dessen Neigung einzustellen.

Gemäß Figur 1 weist die Zugmaschine 1 eine Steueranordnung auf, die im Folgenden erläutert ist. Die Steueranordnung hat eine Kamera 16, die an der Zugmaschine 1 vorderseitig befestigt ist. Die Kamera kann die Bodenoberfläche 10 im vorderen Bereich der Zugmaschine 1 über Kamerabilder erfassen, um eine Bodenwelligkeit der Bodenoberfläche 10 zu ermitteln. Alternativ oder zusätzlich kann vorgesehen sein, eine Kamera 18 an einem Flugroboter 20 anzubringen. Dieser kann sich im Einsatz der Steueranordnung derart in der Luft bewegen, dass er zumindest die Bodenoberfläche 10 vor der Zugmaschine 1 erfasst.

Die Steueranordnung hat des Weiteren eine Steuervorrichtung 22, die in Abhängigkeit der von der Kamera 16 erfassten Bodenwelligkeit das Hubwerk 2 steuert. Die Steuerung erfolgt dabei derart, dass das Anbaugerät 4 in Form des Pflugs gleichmäßige Furchen in die Bodenoberfläche 10 mit einer im Wesentlichen gleichbleibenden Tiefe einbringt.

Alternativ oder zusätzlich zur Kamera 16 kann gemäß Figur 1 ein LiDAR-Sensor oder ein Radarsensor, die mit dem Bezugszeichen 24 gekennzeichnet sind, bei der Zugmaschine 1 vorgesehen sein, um die Bodenwelligkeit zu erfassen. Des Weiteren ist ein GPS Sensor 26 bei der Zugmaschine 1 vorgesehen, um deren Position zu ermitteln. Mit einem GPS Signal des GPS Sensors 26 kann zusammen mit der von der Kamera 16 erfassten Bodenwelligkeit eine Höhenprofilkarte, insbesondere über die Steuervorrichtung 22, erstellt werden.

Des Weiteren hat die Zugmaschine 1 eine Kamera 28, die rückseitig der Zugmaschine 1 Kamerabilder erfasst. Mit der Kamera 28 kann insbesondere eine Pflughöhe und/oder eine Pflugneigung erfasst werden. Eine Erfassung einer Hubwerkshöhe ist über einen Winkelgeber des Hubwerks 2 und/oder über ein Wegmesssystem für den Hydrozylinder 12 und/oder für den Oberlenker 8 ermöglicht. Des Weiteren kann ein Neigungssensor 30 bei der Zugmaschine 1 ausgebildet sein. Des Weiteren kann zur Ermittlung der Pflughöhe ein Ultraschallsensor 32 am Unterlenker 6 des Hubwerks 2 und/oder ein Ultraschallsensor 34 am verschwenkbaren Teil des Anbaugeräts 4 angeordnet sein.

Die Steuervorrichtung 22 hat eine Sensordatenerfassung, um die ermittelten Sensordaten aufzunehmen.

Des Weiteren ist ein Speicher 36 vorgesehen, auf dem die Höhenprofilkarte speicherbar ist. Des Weiteren kann die Höhenprofilkarte auf einem Display 38 der Zugmaschine 1 dargestellt werden.

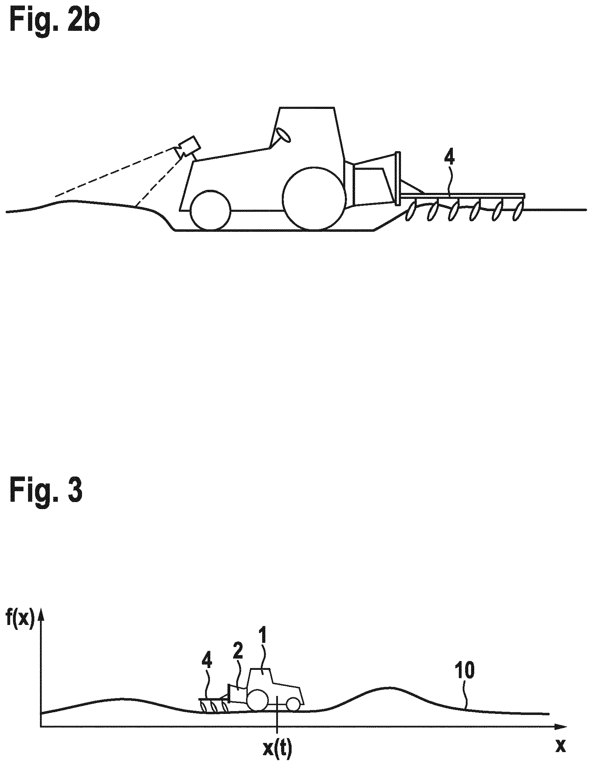

Gemäß Figur 2a ist die Zugmaschine 1 dargestellt, bei der das Hubwerk 2 nicht adäquat zur Bodenwelle 40 vorgesteuert wurde und somit das Anbaugerät 4 in Form des Pflugs zu tief in die Bodenoberfläche 10 eintaucht. Dagegen ist in Figur 2b das Anbaugerät 4 in Form des Pflugs der Bodenwelligkeit entsprechend in seiner Höhe angepasst, was durch die erfindungsgemäße Steueranordnung ermöglicht ist. Die Steueranordnung führt zu einer vorausschauenden Steuerung des Hubwerks 2, da die Bodentopologie vor der Zugmaschine 1 bereits vorausschauend aufgezeichnet werden kann.

Gemäß Figur 3 ist eine Bodenwelligkeit f(x) in Abhängigkeit einer Position x(t) der Zugmaschine 1 gezeigt. Mit dem Neigungssensor 30 aus Figur 1 kann das Oberflächenprofil in Längs- und/oder Querrichtung bestimmt werden. Ist das Oberflächenprofil f(s), das gemäß Figur 3 in Längsrichtung dargestellt ist, bekannt und die Position x(t) und die Geschwindigkeit dx/dt(t) der Zugmaschine 1 bezüglich dieser Topologie bekannt, so kann mithilfe der geometrischen Daten des Hubwerks 2 das Anbaugerät 4 dynamisch immer derart positioniert werden, dass es beispielsweise parallel über die Bodenoberfläche 10 geführt ist. Beim Pflügen kann somit der Pflug derart positioniert sein, dass sich eine möglichst gleichmäßige Tiefe aller Furchen ergibt. Die Information über die Bodenwelligkeit kann auch für ein vorderes Hubwerk genutzt werden.

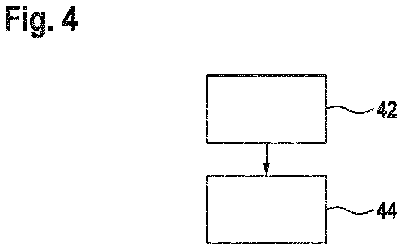

Gemäß Figur 4 ist ein Verfahren zum Steuern der Steueranordnung dargestellt. In einem ersten Schritt 42 wird die Bodenwelligkeit über die Kamera 16 aus Figur 1 erfasst. Im Schritt 44 erfolgt dann die Steuerung des Hubwerks 2 aus Figur 1 in Abhängigkeit der erfassten Bodenwelligkeit. Diese Schritte können beliebig oft wiederholt werden.

Erfindungsgemäß ist eine Steueranordnung für eine Zugmaschine zum Steuern eines Anbaugeräts vorgesehen. Über diese wird die Position des Anbaugeräts in Abhängigkeit einer Bodenwelligkeit gesteuert, die im Voraus von einer Sensorik erfasst ist.

### Bezugszeichen

- 1: Zugmaschine
- 2: Hubwerk
- 4: Anbaugerät
- 6: Unterlenker
- 8: Oberlenker
- 10: Bodenoberfläche
- 12: Hydrozylinder
- 14: Hydrozylinder
- 16: Kamera
- 18: Kamera
- 20: Flugroboter
- 22: Steuervorrichtung
- 24: LiDAR Sensor/ RADAR Sensor
- 26: GPS Sensor
- 28: Kamera
- 30: Neigungssensor
- 32: Ultraschallsensor
- 34: Ultraschallsensor
- 36: Speicher
- 38: Display
- 40: Bodenwelle
- 42: Schritt
- 44: Schritt

## Patentansprüche

1. Steueranordnung zur Hubwerksregelung eines Hubwerks (2) für ein Anbaugerät (4) einer Zugmaschine (1) mit einer Steuervorrichtung (22) zum Steuern des Hubwerks (2), **dadurch gekennzeichnet, dass** eine Sensorik (16) zur Erfassung einer Bodenwelligkeit auf einer angenommenen Fahrspur der Zugmaschine (1) vorgesehen ist, wobei die Steuervorrichtung (22) in Abhängigkeit der erfassten Bodenwelligkeit das Hubwerk (2) steuert, **dadurch gekennzeichnet, dass** eine Sensorik (26) zur Erfassung einer Position der Zugmaschine (1) vorgesehen ist, und dass ein Algorithmus zur Erstellung von Kartendaten anhand der erfassten Bodenwelligkeit und anhand von erfassten Positionen der Zugmaschine (1) vorgesehen ist.

2. Steueranordnung nach Anspruch 1, wobei mit der Steuervorrichtung (22) eine Hubhöhe des Anbaugeräts (2) in Abhängigkeit der erfassten Bodenwelligkeit und/oder eine Neigung des Anbaugeräts (4) in Abhängigkeit der erfassten Bodenwelligkeit steuerbar ist.

3. Steueranordnung nach Anspruch 1 oder 2, wobei die Sensorik zur Erfassung der Bodenwelligkeit eine Kamera (16, 18) aufweist, wobei die Bodenwelligkeit über die Kamerabilder erfasst ist, und/oder wobei die Sensorik zur Erfassung der Bodenwelligkeit ein Light Detection and Ranging (LiDAR) System (24) aufweist, und/oder wobei die Sensorik zur Erfassung der Bodenwelligkeit ein Radio Detection and Ranging (RADAR) System (24) aufweist, und/oder wobei die Sensorik mit einem Satelliten verbindbar ist, um die Bodenwelligkeit satellitengestützt zu erfassen.

4. Steueranordnung nach einem der vorhergehenden Ansprüche, wobei eine Sensorik (28, 32, 34) zur Erfassung einer Ist-Höhe des Anbaugeräts (4) und/oder zur Erfassung einer Ist-Höhe des Hubwerks (2) und/oder zur Erfassung einer Ist-Anbaugerätetiefe vorgesehen ist.

5. Steueranordnung nach Anspruch 4, wobei die Sensorik einen Winkelgeber und/oder ein Wegmesssystem für einen Hubzylinder (8,12) des Hubwerks (2) aufweist, und/oder wobei die Sensorik eine Kamera (28) aufweist, und/oder wobei die Sensorik einen Ultraschallsensor (32, 34) aufweist, und/oder wobei die Sensorik einen Infrarotsensor aufweist, und/oder wobei die Sensorik einen Neigungssensor (30) aufweist.

6. Steueranordnung nach einem der Ansprüche 3 bis 5, wobei ein Algorithmus zur Auswertung von Kamerabildern der Kamera (16) und zur Bestimmung der Bodenwelligkeit vorgesehen ist, und/oder wobei ein Algorithmus zur Auswertung der erfassten Daten des LiDAR Systems und/oder RADAR Systems und/oder des Satelliten und zur Bestimmung der Bodenwelligkeit vorgesehen ist.

7. Steueranordnung nach einem der vorhergehenden Ansprüche, wobei ein Algorithmus vorgesehen ist, der in Abhängigkeit der erfassten Sensordaten eine Soll-Hubwerkshöhe bestimmt.

8. Steueranordnung nach einem der vorhergehenden Ansprüche, wobei ein Algorithmus zum Vorsteuern und/oder Anpassen der Hubwerksregelung vorgesehen ist.

9. Zugmaschine oder Anbaugerät mit einer Steueranordnung gemäß einer der vorhergehenden Ansprüche.

10. Verfahren für eine Steueranordnung gemäß einem der Ansprüche 1 bis 8 oder für eine Zugmaschine gemäß Anspruch 9 mit den Schritten:
- Erfassung der Bodenwelligkeit auf einer angenommenen Fahrspur der Zugmaschine (1),
- Steuerung des Hubwerks (2) in Abhängigkeit der erfassten Bodenwelligkeit,
- Erfassung einer Position der Zugmaschine (1) und
- Erstellung von Kartendaten anhand der erfassten Bodenwelligkeit und anhand von erfassten Positionen der Zugmaschine (1).

## Claims

1. Control assembly for controlling a lifting device (2) for an attachment (4) of a tractor machine (1) with a control device (22) for controlling the lifting device (2), **characterized in that** a sensor system (16) is provided for sensing waviness of the ground on an adopted course of the tractor machine (1), wherein the control device (22) controls the lifting device (2) in accordance with the sensed waviness of the ground, **characterized in that**
a sensor system (26) is provided for sensing a position of the tractor machine (1), and **in that** an algorithm is provided for producing map data on the basis of the sensed waviness of the ground and on the basis of sensed positions of the tractor machine (1).

2. Control assembly according to Claim 1, wherein the control device (22) can be used to control a lifting height of the attachment (2) in accordance with the sensed waviness of the ground and/or an inclination of the attachment (4) in accordance with the sensed waviness of the ground.

3. Control assembly according to Claim 1 or 2, wherein the sensor assembly has a camera (16, 18) for sensing the waviness of the ground, wherein the waviness of the ground is sensed by means of the camera images, and/or wherein the sensor system has a light detection and ranging (LiDAR) system (24) for sensing the waviness of the ground, and/or wherein the sensor system has a radio detection and ranging (RADAR) system (24) for sensing the waviness of the ground, and/or wherein the sensor system can be connected to a satellite in order to sense the waviness of the ground in a satellite-based fashion.

4. Control assembly according to one of the preceding claims, wherein a sensor system (28, 32, 34) is provided for sensing an actual height of the attachment (4) and/or for sensing an actual height of the lifting device (2) and/or for sensing an actual attachment depth.

5. Control assembly according to Claim 4, wherein the sensor system has an angle sensor and/or a displacement measuring system for a lifting cylinder (8, 12) of the lifting device (2), and/or wherein the sensor system has a camera (28), and/or wherein the sensor system has an ultrasonic sensor (32, 34), and/or wherein the sensor system has an infrared sensor, and/or wherein the sensor system has an inclination sensor (30).

6. Control assembly according to one of Claims 3 to 5, wherein an algorithm is provided for evaluating camera images of the camera (16) and for determining the waviness of the ground, and/or wherein an algorithm is provided for evaluating the acquired data of the LiDAR system and/or RADAR system and/or the satellite and for determining the waviness of the ground.

7. Control assembly according to one of the preceding claims, wherein an algorithm is provided which determines a setpoint lifting device height in accordance with the acquired sensor data.

8. Sensor assembly according to one of the preceding claims, wherein an algorithm is provided for carrying out pilot control of the lifting device control system and/or adapting the lifting device control system.

9. Tractor machine or attachment having a control assembly according to one of the preceding claims.

10. Method for a control assembly according to one of Claims 1 to 8 or for a tractor machine according to Claim 9 having the steps:
- sensing the waviness of the ground on an adopted course of the tractor machine (1),
- controlling the lifting device (2) in accordance with the sensed waviness of the ground,
- sensing a position of the tractor machine (1), and
- producing map data on the basis of the sensed waviness of the ground and on the basis of sensed positions of the tractor machine (1).

## Revendications

1. Système de commande pour la régulation d'un mécanisme de levage (2) destiné à un accessoire (4) d'un tracteur (1), comprenant un dispositif de commande (22) destiné à commander le mécanisme de levage (2), **caractérisé en ce qu'**il est prévu un système de capteurs (16) pour détecter une ondulation du sol sur une voie présumée du tracteur (1), dans lequel le dispositif de commande (22) commande le mécanisme de levage (2) en fonction de l'ondulation détectée du sol,
**caractérisé en ce qu'**il est prévu un système de capteurs (26) destiné à détecter une position du tracteur (1), et **en ce qu'**il est prévu un algorithme pour générer des données cartographiques sur la base de l'ondulation détectée du sol et sur la base de positions détectées du tracteur (1).

2. Système de commande selon la revendication 1, dans lequel il est possible de commander à l'aide du dispositif de commande (22) une hauteur de levage de l'accessoire (2) en fonction de l'ondulation détectée du sol et/ou une inclinaison de l'accessoire (4) en fonction de l'ondulation détectée du sol.

3. Système de commande selon la revendication 1 ou 2, dans lequel le système de capteurs comporte une caméra (16, 18) destinée à détecter l'ondulation du sol, dans lequel l'ondulation du sol est détectée par le biais des images de la caméra, et/ou dans lequel le système de capteurs comporte un système du type Light Detection and Ranging (LiDAR) (24) destiné à détecter l'ondulation du sol, et/ou dans lequel le système de capteurs comporte un système du type Radio Detection and Ranging (RADAR) (24) destiné à détecter l'ondulation du sol, et/ou dans lequel le système de capteurs peut être relié à un satellite afin de détecter l'ondulation du sol d'une manière assistée par satellite.

4. Système de commande selon l'une des revendications précédentes, dans lequel il est prévu un système de capteurs (28, 32, 34) destiné à détecter une hauteur réelle de l'accessoire (4) et/ou pour détecter une hauteur réelle du mécanisme de levage (2) et/ou à détecter une profondeur réelle de l'accessoire.

5. Système de commande selon la revendication 4, dans lequel le système de capteurs comporte un capteur angulaire et/ou un système de mesure de course pour un vérin de levage (8, 12) du mécanisme de levage (2), et/ou dans lequel le système de capteurs comporte une caméra (28), et/ou dans lequel le système de capteurs comporte un capteur à ultrasons (32, 34), et/ou dans lequel le système de capteurs comporte un capteur infrarouge, et/ou dans lequel le système de capteurs comporte un capteur d'inclinaison (30).

6. Système de commande selon l'une des revendications 3 à 5, dans lequel il est prévu un algorithme destiné à évaluer des images de caméra de la caméra (16) et à déterminer l'ondulation du sol, et/ou dans lequel il est prévu un algorithme destiné à évaluer des données détectées par le système LiDAR et/ou par le système RADAR et/ou par le satellite et à déterminer l'ondulation du sol.

7. Système de commande selon l'une des revendications précédentes, **caractérisé en ce qu'**il est prévu un algorithme qui détermine une hauteur de consigne du mécanisme de levage en fonction des données de capteurs détectées.

8. Système de commande selon l'une des revendications précédentes, dans lequel il est prévu un algorithme pour précommander et/ou ajuster la régulation du mécanisme de levage.

9. Tracteur ou machine comprenant un système de commande selon l'une des revendications précédentes.

10. Procédé destiné à un système de commande selon l'une des revendications 1 à 8 ou à un tracteur selon la revendication 9, comprenant les étapes suivantes :
- détection de l'ondulation du sol sur une voie supposée du tracteur (1),
- commande du mécanisme de levage (2) en fonction de l'ondulation détectée du sol,
- détection d'une position du tracteur (1) et
- création de données cartographiques sur la base de l'ondulation détectée du sol et sur la base de positions détectées du tracteur (1).
